Europäisches Patentamt

European Patent Office

Office européen des brevets

(11) Veröffentlichungsnummer: **0 007 510**
**B1**

## EUROPÄISCHE PATENTSCHRIFT

(45) Veröffentlichungstag der Patentschrift
02.06.82

(51) Int. Cl.³: **H 02 P 7/28, B 60 L 15/08**

(21) Anmeldenummer: **79102355.9**

(22) Anmeldetag: **09.07.79**

(54) Fahr- und/oder Bremssteuerung für Fahrzeuge mit Gleichstromreihenschlussmotor.

(30) Priorität: **20.07.78 DE 2831943**

(43) Veröffentlichungstag der Anmeldung:
**06.02.80 Patentblatt 80/3**

(45) Bekanntmachung des Hinweises auf die Patenterteilung
**02.06.82 Patentblatt 82/22**

(84) Benannte Vertragsstaaten:
**AT CH DE NL**

(56) Entgegenhaltungen:
**DE-A-1 940 560**
**DE-A-2 437 597**
**FR-A-1 373 565**

(73) Patentinhaber: SIEMENS AKTIENGESELLSCHAFT
Berlin und München, Postfach 22 02 61,
D-8000 München 22 (DE)

(72) Erfinder: Urstöger, Rupert, Wielandstrasse 4,
D-8521 Uttenreuth (DE)

Fahr- und/oder Bremssteuerung für Fahrzeuge mit Gleichstromreihenschlußmotor

Die Erfindung bezieht sich auf eine Fahr- und/oder Bremssteuerung für elektrisch angetriebene Fahrzeuge, insbesondere Straßenbahnen oder Trolleybusse, bei der ein Gleichstromreihenschlußmotor mit stufenweise schaltbaren Widerständen für das Anfahren und/oder Bremsen in Reihe geschaltet ist, ein Gleichstromsteller parallel zur Reihenschlußfeldwicklung angeordnet ist und eine Regeleinrichtung in der Weise vorgesehen ist, daß während des Betriebes auf den einzelnen Widerstandsstufen und beim Schalten zwischen den Widerstandsstufen der in der Reihenschlußwicklung fließende Erregerstrom sich gegenläufig zum Ankerstrom verändert, wobei das Fahr- und/oder Bremsmoment entsprechend einem geforderten Sollwert konstant gehalten wird.

Eine Fahr- und Bremssteuerung dieser Art ist durch die DE-OS 1 940 560 bekannt. Hierbei ist bei Verwendung zweier Motoren jeder Gleichstromreihenschlußmotor zusätzlich mit einer Nebenschlußfeldwicklung versehen und die Nebenschlußfeldwicklung ist in Reihe mit einem Gleichstromsteller parallel zu der Reihenschaltung aus Reihenschlußfeldwicklung, Anker und stufenweise schaltbaren Widerständen angeordnet. Diese Ausführung erfordert wegen der zusätzlichen Nebenschlußfeldwicklung eine teuere Sonderkonstruktion des Gleichstromreihenschlußmotors. Ferner treten beim Schalten der stufenweise überbrückbaren Widerstände Momentensprünge auf.

Aus der CH-PS 401 232 ist eine Einrichtung zur Feldschwächung von Fahrmotoren für elektrische Triebfahrzeuge bekannt, bei der beim Anfahren an die Motorklemmen eine veränderbare Spannung gelegt wird. Hierzu dienen in bekannter Weise stufenweise schaltbare Widerstände. Zur Erweiterung der bekannten Spannungssteuerung ist der Reihenschlußwicklung ein taktweise zu schaltender Halbleiterwiderstand zugeordnet. Mit dieser Ausführung kann zwar eine kontinuierliche Feldschwächung nach dem Anfahren, also dann vorgenommen werden, wenn die Fahrwiderstände vollständig abgeschaltet sind, während des Anfahrens treten jedoch durch das stufenweise Schalten der Widerstände starke Momentensprünge auf. Beim Bremsen wird der Reihenschlußmotor ohne Änderung der Feldkreise auf einen unveränderbaren Bremswiderstand geschaltet und durch periodisches Schalten des Halbleiterwiderstandes der Feldstrom derart beeinflußt, daß eine gewünschte Bremscharakteristik erreicht wird, ohne daß der Bremswiderstand während des Schaltvorganges verkleinert werden muß. Mit einer derartigen Schaltung kann eine Widerstandsbremsung nur in einem verhältnismäßig kleinen Drehzahlbereich vorgenommen werden. Um die Bremsung über einen möglichst großen Drehzahlbereich vornehmen zu können, könnte man einen an sich bekannten Bremswiderstand mit stufenweise kurzschließbaren Teilwiderständen verwenden. Das stufenweise Schalten bewirkt aber Momentensprünge, die ruckartige Änderungen der Verzögerung des Fahrzeuges ergeben, was sich für die Passagiere als Komfortbeeinträchtigung auswirkt. Darüberhinaus können die Momentensprünge bei Fahrzeugen ohne zwangsweise Spurführung, wie z. B. bei Trolleybussen, auf verschmutzten oder vereisten Straßen zur Einleitung von Gleitvorgängen führen, womit eine erhebliche Unfallgefahr verbunden ist. Eine Verkleinerung der Stufensprünge ist zwar durch eine feinstufigere Widerstandsauslegung zu erreichen, diese erfordert jedoch einen entsprechenden Mehr aufwand an Schaltmitteln, Leitungen und für die Steuerung.

Verwendet man einen Gleichstromsteller im Ankerkreis, so werden die Stufensprünge zwar völlig vermieden, der Aufwand für den Steller und die dazu erforderlichen Glättungsmittel sind jedoch sehr hoch.

Aufgabe der Erfindung ist es, unter Beibehaltung einer kostengünstigen Ausrüstung, insbesondere mit den stufenweise schaltbaren Widerständen im Ankerkreis, die Momentensprünge so weit zu reduzieren, daß der Komfort und die Fahrsicherheit nicht mehr beeinträchtigt werden.

Die Lösung dieser Aufgabe besteht bei einer Fahr- und/oder Bremssteuerung der eingangs genannten Art erfindungsgemäß darin, daß der Gleichstromsteller in Verbindung mit ohmschen Widerständen nur der Reihenschlußfeldwicklung parallel geschaltet ist und beim Schalten auf eine niedrigere Widerstandsstufe der Gleichstromsteller zur Abschwächung des magnetischen Flusses zeitlich vor dem Schalten des Stufenschützkontaktes voll leitend geschaltet wird, wobei diese Voreilung etwa der Schützschaltzeit in der Weise entspricht, daß die noch auftretenden geringen Momentenspitzen einen annähernd symmetrischen Verlauf haben.

Auf diese Weise ist es möglich, Momentensprünge im Schaltzeitpunkt bis auf eine geringe Restabweichung vom idealen Momentenverlauf ohne Verwendung eines Gleichstromstellers im Ankerkreis zu glätten. Gegenüber den bekannten Widerstandsbremsschaltungen ist es möglich, die Bremswiderstände grobstufiger auszubilden, ohne die Restabweichung wesentlich zu erhöhen, wobei im Gegensatz zur bekannten Ausführung gemäß der DE-OS 1 940 560 eine teure Sonderkonstruktion der Gleichstromreihenschlußmaschine vermieden wird.

In der Zeichnung ist ein Ausführungsbeispiel der Erfindung dargestellt. Es zeigt

Fig. 1 eine Fahr- und Bremssteuerung für einen Trolley-Bus,

Fig. 2 ein Drehzahl-Momenten-Diagramm für das Bremsen,

Fig. 3 den zeitlichen Verlauf des Drehmomentes für das Bremsen und

Fig. 4 ein Momenten-Drehzahl-Diagramm für die in Fig. 1 gezeigte Schaltung für einen Fahrbetrieb.

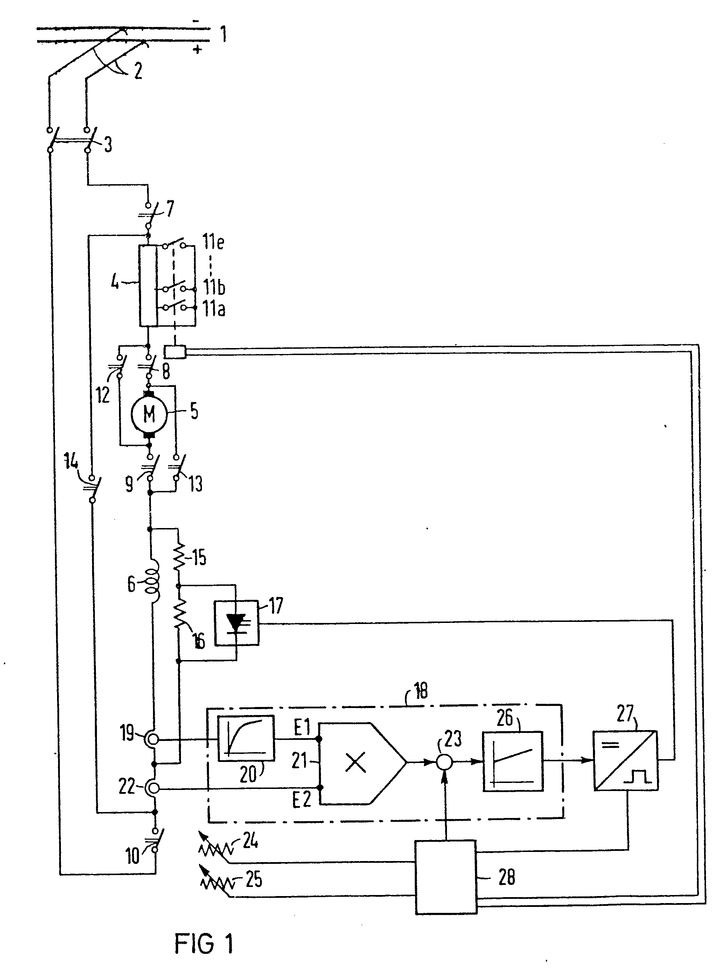

In Fig. 1 sind mit 1 Fahrleitungen bezeichnet, die über einen Stromabnehmer 2, einen Fahrschalter 3 und einem stufenweise schaltbaren Widerstand 4 einen Reihenschlußfahrmotor 5 mit einer Reihenschlußfeldwicklung 6 speisen.

Zum Fahren werden die Schütze 7, 8, 9, 10 geschlossen. Mit zunehmender Fahrgeschwindigkeit werden die Stufenschalt-Schütze 11a bis 11e eingeschaltet und damit der Widerstand 4 stufenweise überbrückt.

Zum Übergang vom Fahren auf Bremsen werden die Schütze 7 bis 10 und die Stufenschalt-Schütze 11a bis 11e geöffnet und die Ankerwende-Schütze 12, 13 sowie das Brems-Schütz 14 geschlossen.

Parallel zur Reihenschlußfeldwicklung 6 liegen in Reihe geschaltete ohmsche Widerstände 15 und 16, wobei dem Widerstand 16 ein Gleichstromsteller 17 parallel geschaltet ist. Der Gleichstromsteller 17 wird von einer Regeleinrichtung 18 gesteuert. Hierbei wird von einem Meßfühler 19 der Erregerstrom erfaßt und über einen Funktionsgenerator 20 dem ersten Eingang E1 eines Multiplikators 21 zugeführt. Im Funktionsgenerator 20 wird abhängig von einem dem Erregerstrom proportionalen Signal ein dem magnetischen Fluß $\Phi$ proportionales Ausgangssignal gebildet. Am zweiten Eingang E2 des Multiplikators 21 wird der in einem weiteren Meßfühler 22 erfaßte Ankerstrom zugeführt. Das am Ausgang des Multiplikators 21 abgenommene Signal, das dem Produkt aus dem magnetischen Fluß $\Phi$ und dem Ankerstrom proportional ist, wird als Momentan-Istwert an den Vergleicher 23 gegeben. Als Momenten-Sollwert wird ein vom Fahrpedal oder Bremspedal über das Potentiometer 24 bzw. 25 vorgegebener Signalwert über eine Steuereinrichtung eingegeben. In der Steuereinrichtung 28 werden die Sollwerte unter Beachtung des Vorranges für den Brems-Sollwert entsprechend aufbereitet. Die Soll-Istwertabweichung wird im Regelverstärker 26 verstärkt. Dessen Ausgangssignal steuert einen Steuersatz 27, der die Zünd- und Löschimpulse für den Gleichstromsteller 17 bildet.

Von der Steuereinrichtung 28 wird ferner über Schütze 11a bis 11e die stufenweise Zu- und Abschaltung von Teilwiderständen des Widerstandes 4 und auch das Schalten aller für die Herstellung der Fahr- und Bremsschaltung erforderlichen Schütze 7 bis 14 gesteuert.

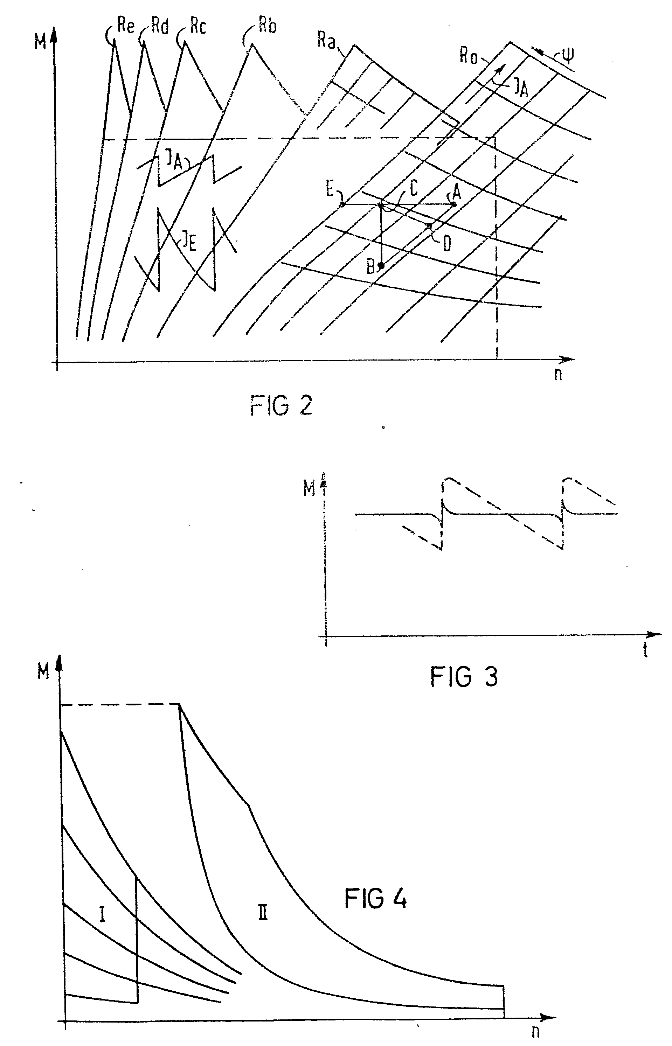

Die Wirkungsweise der gezeigten Schaltungsanordnung wird anhand des in Fig. 2 gezeigten Bremsdiagramms im folgenden näher erläutert. Auf der Ordinate ist das Bremsmoment M und auf der Abszisse die Drehzahl n aufgetragen. Mit Ro und Ra bis Re sind die Bremskennlinien der einzelnen Widerstandsstufen bei größter Erregung bezeichnet. Zu der Bremskennlinie Ro ist der Zusammenhang zwischen Bremsmoment und Drehzahl in Abhängigkeit von Ankerstrom $J_A$

und dem Erregergrad $\psi$ als Kennlinienfeld dargestellt. Für die Bremskennlinien der übrigen Widerstandsstufen ergibt sich ein geometrisch ähnlicher Verlauf (Verkürzung in Abszissenrichtung). Für den Brems-Betriebspunkt A sind die Werte für $J_A$ und $\psi$ ablesbar. Soll bei sinkender Drehzahl, die sich infolge des Bremsens einstellt, das Moment konstant gehalten werden, muß zur Erfüllung der Bedingung $M = k_1 \cdot \Phi \cdot J_A = $ konstant bei sinkendem Ankerstrom der Erregergrad $\psi$ erhöht werden.

Ausgehend vom Betriebspunkt A würde sich mit sinkender Drehzahl bei gleichbleibendem Erregergrad die Motor-EMK und damit der im Bremskreis fließende Ankerstrom stark verringern (Strecke A-B), was zu einer Verringerung des Bremsmomentes führen würde (Punkt B). Die erfindungsgemäße Regeleinrichtung verändert den Erregerstrom $J_E$ gegenläufig zum Ankerstrom $J_A$ dadurch, daß die Aussteuerung des Gleichstromstellers 17 kontinuierlich verändert wird. Dies bewirkt, daß der über Feldwicklung 6 fließende Anteil des Ankerstromes derart vergrößert wird, daß das Bremsmoment konstant bleibt (Punkt C). Dabei verringert sich der Ankerstrom beim Durchfahren der gleichen Drehzahlspanne nur um den kleineren Betrag AD. Mit weiterer Verringerung der Drehzahl wird in der beschriebenen Weise durch gegenläufiges Ändern des Erregerstromes zum Ankerstrom der Betriebspunkt E erreicht, von dem ab eine weitere Steigerung der Erregung und damit die Einhaltung eines konstanten Momentes nicht mehr möglich ist. Der Gleichstromsteller 17 hat dabei die Aussteuerung Null erreicht (Sperrzustand) und taktet nicht mehr. Davon abhängig wird die Zuschaltung der nächsten kleineren Widerstandsstufe (Schließen des Schützes 11a) von der Steuereinrichtung 28 eingeleitet. Durch das Abschalten des Teilwiderstandes würden der Ankerstrom $J_A$ und der Erregerstrom $J_E$ und damit das Bremsmoment M sprungartig auf einen wesentlich höheren neuen Wert ansteigen. Um dies zu vermeiden, wird etwa gleichzeitig mit dem Schaltbefehl für das Schütz 11a der Gleichstromsteller 17 auf volle Aussteuerung (voll-leitender Zustand) geschaltet, so daß schon während der Schaltzeit des Schützes 11a der Erregerstrom abklingen kann und der für den Betriebspunkt E im Kennlinienfeld zu Ra erforderliche niedrige Erregergrad erreicht wird.

Damit kann bewirkt werden, daß die noch auftretenden geringen Momentenspitzen einen annähernd symmetrischen Verlauf haben (Fig. 3). Im Vergleich dazu ist gestrichelt der Momentenverlauf dargestellt, der sich ohne Verwendung der erfindungsgemäßen Regeleinrichtung ergeben würde.

Während des Betriebes auf der neuen Bremsstufe (Fig. 2) und allen folgenden Bremsstufen wird das Bremsmoment in der beschriebenen Weise konstant gehalten. Der Verlauf des Anker- und Erregerstromes ist am Übergang zwischen den Stufen Rb, Rc und Rd eingezeichnet.

Fig 4 zeigt ein Momentendrehzahldiagramm für das Fahren, aus dem weitere Betriebsmöglichkeiten der erfindungsgemäßen Steuereinrichtung hervorgehen. Im Betriebsbereich I wird durch kontinuierliche Feldschwächung über mehrere Widerstandsstufen hinweg ein zusammenhängender kontinuierlich steuerbarer Fahrbetrieb erzielt. Der Bereich II gibt den Feldschwächebereich nach Abschalten der Widerstände an, der ebenfalls kontinuierlich befahren werden kann.

1 Fahrleitungen
2 Stromabnehmer
3 Fahrschalter
4 stufenweise schaltbarer Widerstand
5 Reihenschlußfahrmotor
6 Reihenschlußfeldwicklung
7 Schütz
8 Schütz
9 Schütz
10 Schütz
11a bis 11e Stufenschalt-Schütze
12 Ankerwende-Schütz
13 Ankerwende-Schütz
14 Bremsschutz
15 Widerstand
16 Widerstand
17 Gleichstromsteller
18 Regeleinrichtung
19 Meßfühler für Erregerstrom
20 Funktionsgenerator
21 Multiplikator
22 Meßfühler für Ankerstrom
23 Soll-Ist-Vergleich
24 Sollwertgeber
25 Sollwertgeber
26 Regelverstärker
27 Steuersatz für den Gleichstromsteller
28 Steuereinrichtung
E1 Eingang des Multiplikators
E2 Eingang des Multiplikators

## Patentansprüche

1. Fahr- und/oder Bremssteuerung für elektrisch angetriebene Fahrzeuge, insbesondere Straßenbahnen oder Trolleybusse, bei der ein Gleichstromreihenschlußmotor (5) mit stufenweise schaltbaren Widerständen (4) für das Anfahren und/oder Bremsen in Reihe geschaltet ist, ein Gleichstromsteller (17) parallel zur Reihenschlußfeldwicklung (6) angeordnet ist und eine Regeleinrichtung (18) in der Weise vorgesehen ist, daß während des Betriebes auf den einzelnen Widerstandsstufen und beim Schalten zwischen den Widerstandsstufen der in der Reihenschlußwicklung (6) fließende Erregerstrom sich gegenläufig zum Ankerstrom verändert, wobei das Fahr- und/oder Bremsmoment entsprechend einem geforderten Sollwert konstant gehalten wird, dadurch gekennzeichnet, daß der Gleichstromsteller (17) in Verbindung mit ohmschen Widerständen (15, 16) nur der Reihenschlußfeldwicklung (6) parallel geschaltet ist und beim Schalten auf eine niedrigere Widerstandsstufe der Gleichstromsteller (17) zur Abschwächung des magnetischen Flusses zeitlich vor dem Schalten des Stufenschützkontaktes voll leitend geschaltet wird, wobei diese Voreilung etwa der Schützschaltzeit in der Weise entspricht, daß die noch auftretenden geringen Momentenspitzen einen annähernd symmetrischen Verlauf haben (Fig. 1, 3).

2. Steuerung nach Anspruch 1, dadurch gekennzeichnet, daß der Regeleinrichtung (18), die vorzugsweise als PI-Regler ausgeführt ist, der Momenten-Istwert aus einem Multiplikator (21) zugeführt wird, der den Ankerstrom-Istwert und den über einen Funktionsgenerator (20) aus dem Erregerstrom-Istwert gebildeten Wert für den magnetischen Fluß ($\Phi$) miteinander multipliziert.

## Claims

1. A drive and/or brake control system for electrically driven vehicles, in particular trams or trolley busses, wherein a series-wound d. c. motor (5) has seriesconnected impedances (4) which can be switched in stages for starting and/or braking, and wherein a d. c. — chopper regulator (17) is arranged in parallel with the series-wound field winding (6) and a regulating device (18) is arranged in such manner that during operation at any of the individual impedance stages and during switching between the stages, the excitation current flowing in the series field winding (6) changes in opposite manner to the armature current, the drive and/or brake momentum being maintained so as to be constant in accordance with a required theoretical value, characterised in that the d. c. — chopper regulator (17) and associated resistors (15, 16) are connected in parallel to the series field winding (6) and during switching to a lower impedance stage, the d. c. — chopper regulator (17) is switched so as to be fully conductive before switching the step contactor, in order to reduce the magnetic flux, with an advance that approximately corresponds to the switching time of the contactor in such manner that the residual transient peaks are virtually symmetrical, (Fig. 1, 3).

2. A control system as claimed in claim 1, characterised in that the regulating device (18), which is preferably designed as a PI-regulator, is supplied with the actual moment values from a multiplier (21) which multiplies the actual value of the armature current by the value formed by means of a function generator (20) for the magnetic flux ($\Phi$) from the actual value of the excitation current.

## Revendications

1. Commande de marche et/ou de freinage pour des véhicules à propulsion électrique, plus particulièrement pour tramway et trolleybus, du type dans lequel un moteur-série (5) à courant continu est monté en série avec des résistances (4) commutables plot par plot pour le démarrage et/ou le freinage, un dispositif de contrôle à courant continu (17) disposé en parallèle à un enroulement inducteur (6) en montage en série et un dispositif de réglage (18) sont prévus de telle façon que le courant d'excitation qui passe par l'enroulement inducteur (6) pendant le fonctionnement sur les différents plots de résistance ou lors de la commutation entre deux plots de résistance, varie en sens inverse du courant d'induit, le couple d'entraînement et/ou le couple de freinage étant maintenu constant en fonction d'une valeur de consigne exigée, caractérisée par le fait que le dispositif de contrôle à courant continu (17), en combinaison avec des résistances ohmiques (15, 16) n'est monté en série qu'avec l'enroulement inducteur (6) en montage en série et que lors de la commutation sur un plot de résistance plus bas, le dispositif de contrôle à courant continu (17) est commuté dans son état de totale conduction temporellement avant la commutation du contact du contacteur par paliers, cette avance correspondant en ce sens sensiblement à la durée de commutation du contacteur que les faibles pointes de couple présentent une allure sensiblement symétrique.

2. Commande selon la revendication 1, caractérisé par le fait que le dispositif de réglage (18) qui est de Préférence réalisé sous la forme d'un régulateur proportionnel et intégral et auquel est appliquée la valeur instantanée du couple, à partir d'un multiplicateur (21) qui forme le produit entre la valeur instantanée du courant d'induit et la valeur du flux magnétique ($\Phi$) formé par un générateur de fonction à partir de la valeur instantanée du courant d'excitation.

FIG 1

FIG 2

FIG 3

FIG 4

9